# EUROPEAN PATENT SPECIFICATION

(11) **EP 4 329 377 B1**
(45) Date of publication and mention of the grant of the patent: **27.05.2026**
(21) Application number: 21937813.0
(22) Date of filing: 19.04.2021
(51) Int. Cl.: H04W 48/10, H04W 76/15, H04W 84/12

(54) **BASE STATION**
BASISSTATION
STATION DE BASE

(43) Date of publication of application: 28.02.2024
(73) Proprietor: NTT, Inc., Tokyo 100-8116 (JP)
(72) Inventor: KISHIDA, Akira, Musashino-shi, Tokyo 180-8585 (JP); INOUE, Yasuhiko, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2021/015898
(87) International publication number: WO 2022/224315

(56) References cited:
- JP-A- 2015 512 223
- US-A1- 2018 206 143
- US-A1- 2019 182 759
- US-A1- 2021 014 911

## Description

### Technical Field

An embodiment relates to a base station.

### Background Art

A wireless LAN (Local Area Network) is known as a wireless system for wirelessly connecting a base station and a terminal. Also, in the wireless LAN, a multi-link in which the base station and the terminal are wirelessly connected using a plurality type of bands (channels) is sometimes utilized. A beacon is sometimes utilized for setup in establishing the multi-link and for notification of operation information of the multi-link.

### Citation List

### Non Patent Literature

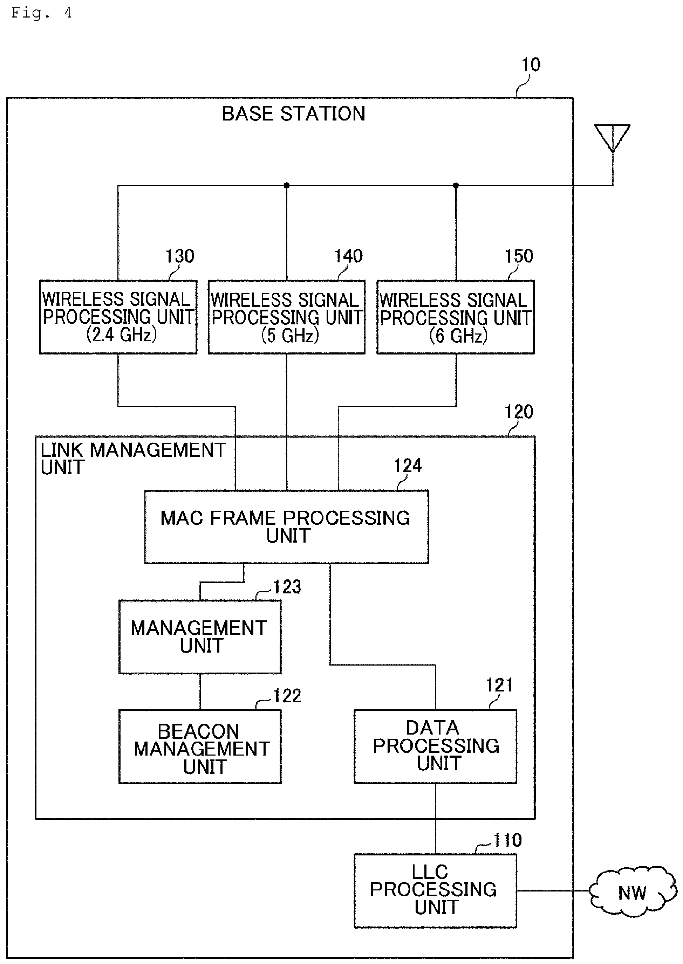

NPL 1: IEEE Std 802.11-2016, "Figure 4-25 Establishing the IEEE 802.11 association" and "11.3 STA authentication and association", 7 December 2016

### Patent Literature

US 2019/182759 A1 discloses sending an aggregated beacon in a cognitive wireless network are disclosed. A beacon device may segment beacon information and send beacon segments via a plurality of channels simultaneously. A certain information elements of the beacon information may be included in each beacon segment. Each beacon segment may include channel information for other beacon segments that are transmitted simultaneously. Alternatively, a discovery beacon may be transmitted in addition to a regular beacon. The discovery beacon may include information indicating an operating channel on which the regular beacon is transmitted. The discovery beacon may be transmitted using a predetermined channel bandwidth, with a smaller beacon interval than the regular beacon, or in a frequency hopping fashion. The discovery beacon may be sent on a channel selected based on a regulatory class and corresponding channel information. The discovery beacon may be transmitted on a side channel.

US 2018/206143 A1 discloses that a wireless device supporting multi-link communication may identify an anchor link and one or more supplementary links. For example, the anchor link may provide reliable communications while the supplementary links may provide increased throughput relative to the anchor link As an example, the anchor link may be dedicated for use to communicate management or control information, as well as data, while the supplementary links in the multi-link session may be used to communicate data according to the control and management information transmitted on the anchor link.

### Summary of Invention

### Technical Problem

An embodiment provides a base station capable of efficiently transmitting beacons using a plurality of channels.

### Solution to Problem

The reader is referred to the appended independent claims. Some preferred features are laid out in the dependent claims.

A base station of an embodiment includes a first wireless signal processing unit, a second wireless signal processing unit, and a beacon management unit. The first wireless signal processing unit is configured to be able to transmit and receive a wireless signal using a first channel. The second wireless signal processing unit is configured to be able to transmit and receive a wireless signal using a second channel different from the first channel. The beacon management unit manages transmission of a beacon of the first wireless signal processing unit so that the first beacon is periodically transmitted from the first wireless signal processing unit, and manages transmission of a beacon of the second wireless signal processing unit so that the first beacon and a second beacon including information simplified more than information included in the first beacon are periodically switched and transmitted from the second wireless signal processing unit.

### Advantageous Effects of Invention

According to an embodiment, there is provided a base station capable of efficiently transmitting beacons using a plurality of channels.

### Brief Description of Drawings

Fig. 1 is a diagram showing an example of a configuration of a wireless system according to an embodiment.
Fig. 2 is a diagram showing a specific example of a MAC frame format used in communication between a base station and a terminal in the wireless system according to the embodiment.
Fig. 3 is a diagram showing an example of a configuration of the base station.
Fig. 4 is a diagram showing an example of a functional configuration of the base station.
Fig. 5 is a diagram showing an example of a configuration of the terminal.
Fig. 6 is a diagram showing an example of the functional configuration of the terminal.
Fig. 7 is a flowchart showing an example of multi-link setup processing in the wireless system according to the embodiment.
Fig. 8 is a diagram showing an example of information included in a normal beacon.
Fig. 9 is a diagram showing an example of a frame format of a management frame.
Fig. 10 is a diagram showing an example of information included in a simple beacon.
Fig. 11 is a diagram showing an example of a frame format of a S1G beacon frame.
Fig. 12 is a flowchart showing beacon selection processing for each channel.
Fig. 13 is a flowchart showing beacon selection processing for each period.
Fig. 14 is a diagram showing beacons transmitted on each of a channel used as an anchor link and other channels not used as an anchor link.
Fig. 15 is a flowchart showing beacon selection processing for each channel according to a modification example 1.
Fig. 16 is a diagram showing beacons transmitted on each of a channel used as an anchor link and other channels not used as an anchor link in the modification example 1.
Fig. 17 is a flowchart showing beacon selection processing for each period according to a modification example 2.
Fig. 18 is a diagram showing beacons transmitted on each of a channel used as an anchor link and other channels not used as an anchor link in the modification example 2.

### Description of Embodiments

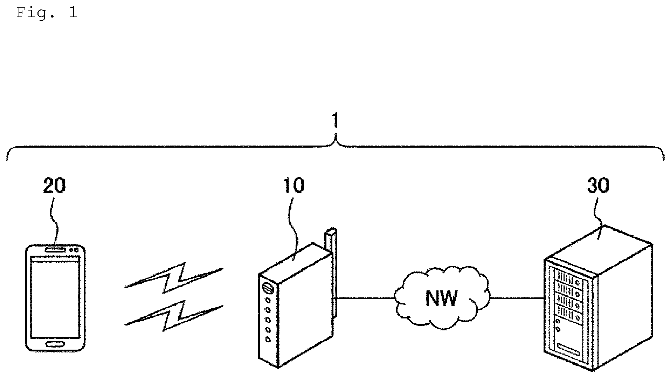

An embodiment will be described hereinafter with reference to the drawings. Fig. 1 is a diagram showing an example of a configuration of a wireless system 1 according to an embodiment. As shown in Fig. 1, the wireless system 1 includes, for example, a base station 10, a terminal 20, and a server 30.

The base station 10 is connected to a network NW and is used as an access point (AP) of a wireless LAN. For example, the base station 10 can distribute data received from the network NW to the terminal 20 wirelessly. Also, the base station 10 can be connected to the terminal 20 using one type of band or a plurality of types of bands. In the present specification, a wireless connection between the base station 10 and the terminal 20 using a plurality of types of bands is referred to as a "multi-link". Communication between the base station 10 and the terminal 20 is based on, for example, the IEEE 802.11 standard. This time describes communication based on the IEEE 802.11 standard as an example, but it is not limited to this.

The terminal 20 is a wireless terminal such as a smartphone or a tablet PC. The terminal 20 can transmit and receive data to and from the server 30 on the network NW via the wirelessly connected base station 10. The terminal 20 may be other electronic equipment, such as a desktop computer or a laptop computer. The terminal 20 has no specific limitations as long as at least it is able to communicate with the base station 10.

The server 30 can retain various types of information and retains, for example, data of contents for the terminal 20. The server 30 is connected to, for example, the network NW by wire and is able to communicate with the base station 10 via the network NW. Note that the server 30 may be able to communicate with at least the base station 10. That is, communication between the base station 10 and the server 30 may be wired or wireless communication.

In the wireless system 1 according to the embodiment, wireless communication between the base station 10 and the terminal 20 is based on the IEEE802.11 standard. The IEEE802.11 standard regulates a first layer of an OSI (Open Systems Interconnection) reference model and a MAC sub-layer of a second layer. In the OSI reference model, communication functions are split into seven layers (first layer: physical layer, second layer: data link layer, third layer: network layer, fourth layer: transport layer, fifth layer: session layer, sixth layer: presentation layer, and seventh layer: application layer). Further, the data link layer includes, for example, a Logical Link Control (LLC) layer and a Media Access Control (MAC) layer. In the LLC layer, for example, an LLC packet is formed by adding a Destination Service Access Point (DSAP) header, Source Service Access Point (SSAP) header, or the like to data inputted from a higher-level application. In the MAC layer, for example, a MAC frame is formed by adding a MAC header to the LLC packet. In this description, the processing for the MAC sub-layers of the first layer and the second layer regulated by the IEEE 802.11 standard is mainly described, and the description for the processing for the other layers is omitted.

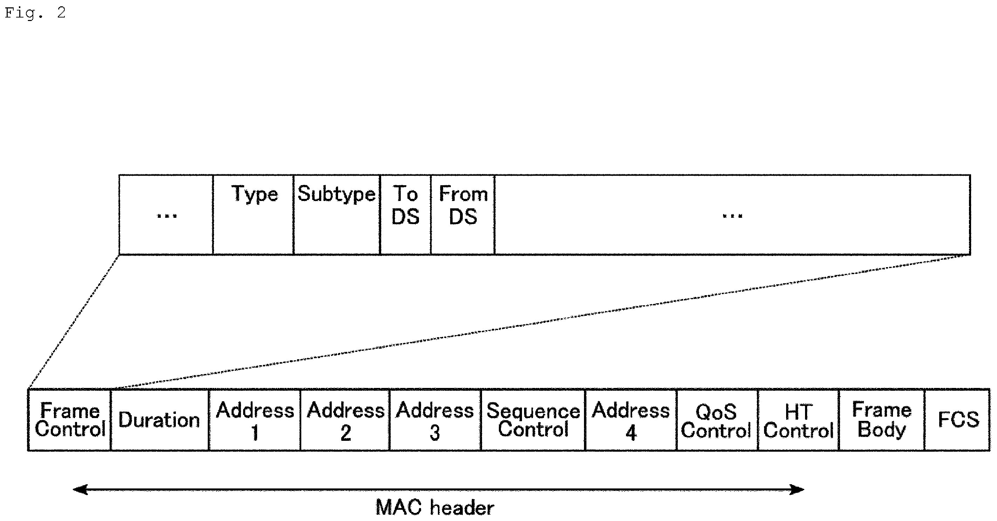

Fig. 2 is a diagram showing a specific example of a MAC frame format used in communication between the base station 10 and terminal 20 in the wireless system 1 according to the embodiment. As shown in Fig. 2, the MAC frame is constructed of, for example, a Frame Control field, a Duration field, an Address 1 field, an Address 2 field, an Address 3 field, a Sequence Control field, an Address 4 field, a QoS Control field, an HT Control field, a Frame Body field and a Frame Check Sequence (FCS) field. These fields may or may not be included depending on the type of a wireless frame.

The Frame Control field to the HT Control field correspond to a MAC header. The Frame Body field corresponds to a MAC payload. The FCS field stores an error detection code of the MAC header and the Frame Body field. The FCS field is used to judge whether or not there is an error in the MAC frame.

The Frame Control field includes various control information, for example, Type value, Subtype value, To DS (Distribution System) value and From DS value. Type value indicates whether the MAC frame is a management frame, a control frame, or a data frame. The Subtype value indicates a frame type of the MAC frame by used in combination with the Type value. For example, "00/1000 (Type value/Subtype value)" indicates that the MAC frame is a beacon. In addition, "00/0100 (Type value/Subtype value)" indicates that the MAC frame is a probe request. Further, "00/0101 (Type value/Subtype value)" indicates that the MAC frame is a probe response. The To DS value and the From DS value have different meanings depending on a combination. For example, when the MAC frame is a data frame, if the To DS value is "0", it indicates that the reception station is the terminal, if the To DS value is "1", it indicates that the reception station is the base station. In addition, when the MAC frame is a data frame, if the From DS value is "0", it indicates that the transmission station is the terminal, if the From DS value is "1", it indicates that the transmission station is the base station. On the other hand, when the MAC frame is a management frame or a control frame, the To DS value and the From DS value are fixed to, for example, "0".

The Duration field indicates a scheduled term for using a wireless channel. The Address field indicates a BSSID, a transmission source MAC address, a destination MAC address, an address of a transmitter terminal, an address of a receiver terminal, or the like. The number of Address fields used varies depending on the frame type. The Sequence Control field indicates a sequence number of the MAC frame and a fragment number for a fragment. The QoS Control field is used for a QoS (Quality of Service) function in the MAC frame. The QoS Control field may include a Traffic Identifier (TID) subfield. The HT Control field is a Control field for a high-throughput function. The Frame Body field includes information corresponding to a frame type. For example, in a case where the frame type is a data frame, transmission data is stored in the Frame Body field.

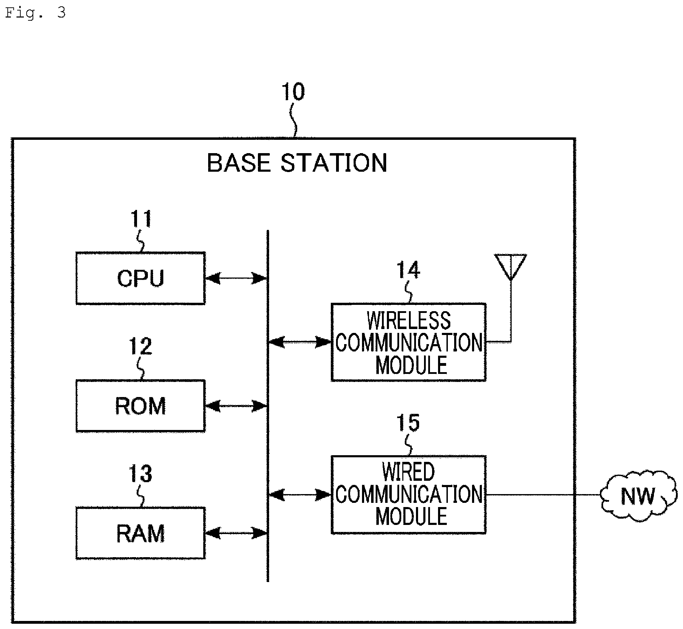

Fig. 3 is a diagram showing an example of a configuration of the base station 10. As shown in Fig. 3, the base station 10 includes, for example, a CPU (Central Processing Unit) 11, a ROM (Read Only Memory) 12, a RAM (Random Access Memory) 13, a wireless communication module 14, and a wired communication module 15.

The CPU 11 is a circuit capable of executing various programs, and controls overall operations of the base station 10. The ROM 12 is a non-volatile semiconductor memory and retains, for example, a program and control data for controlling the base station 10. The RAM 13 is, for example, a volatile semiconductor memory and is used as a work area of the CPU 11. The wireless communication module 14 is a circuit used to transmit and receive data by wireless signals and is connected to an antenna. In addition, the wireless communication module 14 includes, for example, a plurality of communication modules respectively corresponding to a plurality of frequency bands. The wired communication module 15 is a circuit used to transmit and receive data using a wired signal and is connected to the network NW.

Fig. 4 is a diagram showing an example of a functional configuration of the base station 10. As shown in Fig. 4, the base station 10 includes, for example, an LLC processing unit 110, a link management unit 120, and wireless signal processing units 130, 140, and 150. The processing of the LLC processing unit 110, the link management unit 120, and the wireless signal processing units 130, 140, and 150 is realized by the wireless communication module 14 or a combination of the CPU 11 and the wireless communication module 14.

The LLC processing 110 unit is capable of executing the LLC layer processing on inputted data. For example, the LLC processing unit 110 adds a DSAP (Destination Service Access Point) header and an SSAP (Source Service Access Point) header and so forth to data inputted from the server 30 via the network NW to generate the LLC packets. Then, the LLC processing unit 110 outputs the LLC packets to the link management unit 120. In addition, the LLC processing unit 110 extracts data from the MAC frame inputted from the link management unit 120. Further, the LLC processing unit 110 transmits the data to the server 30 via the network NW.

The link management unit 120 is capable of executing the MAC layer processing on inputted data. In addition, the link management unit 120 manages a link with the terminal 20 based on notifications from the wireless signal processing units 130, 140, and 150. The link management unit 120 includes a data processing unit 121, a beacon management unit 122, a management unit 123, and a MAC frame processing unit 124.

When receiving the LLC packet from the LLC processing unit 110, the data processing unit 121 adds a MAC header to the LLC packet to generate a MAC frame. Then, the data processing unit 121 outputs the MAC frame to the MAC frame processing unit 124. When receiving the MAC frame from the MAC frame processing unit 124, the data processing unit 121 extracts the LLC packet from the MAC frame. Then, the data processing unit 121 outputs the LLC packet to the LLC processing unit 110. In addition, when the divided data are transmitted from the plurality of wireless signal processing units by a multi-link, the data processing unit 121 rearranges the MPDUs (MAC Protocol Data Unit) to be restored from the MAC frame received from the MAC frame processing unit 124 in accordance with a sequence number. Then, the data processing unit 121 outputs the LLC packet to the LLC processing unit 110 when the arrangement order is completed. Note that the rearrangement of the MPDUs may be performed by other than the data processing unit 121.

The beacon management unit 122 manages transmission of a beacon for each link. The beacon management unit 122 manages, for example, a transmission period of a beacon for each link. The beacon management unit 122 manages, for example, whether a beacon transmitted for each link is a normal beacon or a simple beacon. The normal beacon is a beacon including all information used for a setup of the multi-link or the like. The simple beacon is a beacon including simplified information with respect to the normal beacon. The normal beacon and the simple beacon will be described later in detail.

The management unit 123 manages a link with the terminal 20 based on notifications received from the wireless signal processing units 130, 140 and 150 via the MAC frame processing unit 124. For example, the management unit 123 performs a multi-link setup in response to a request from the terminal 20 via any of the wireless signal processing units 130, 140 and 150. In the multi-link setup, when receiving a connection request of the terminal 20 via one of the wireless signal processing units 130, 140 and 150, the management unit 123 executes a protocol related to association. Then, the management unit 123 executes a protocol related to authentication in succession to the connection request.

When receiving a MAC frame from the data processing unit 121, the MAC frame processing unit 124 temporarily stores the received MAC frame. Then, the MAC frame processing unit 124 performs carrier sensing over a random time, and confirms a state of a channel used in a link for transmitting a wireless signal. When the channel is empty, the MAC frame processing unit 124 outputs the MAC frame to the wireless signal processing unit corresponding to a link for transmitting the wireless signal among the wireless signal processing units 130, 140, and 150. Also, when receiving the MAC frame from the wireless signal processing units 130, 140, or 150, the MAC frame processing unit 124 outputs the received MAC frame to the data processing unit 121.

Each of the wireless signal processing units 130, 140, and 150 is capable of executing, for example, processing of the physical layer on the inputted wireless signal. That is, each of the wireless signal processing units 130, 140, and 150 performs transmission and reception of wireless data between the base station 10 and the terminal 20. The wireless signal processing unit 130 handles wireless signals in the 2.4 GHz band. The wireless signal processing unit 140 handles wireless signals in the 5 GHz band. The wireless signal processing unit 150 handles wireless signals in the 6 GHz band. The wireless signal processing units 130, 140 and 150 may or may not share the antenna of the base station 10.

For example, when receiving the MAC frame from the MAC frame processing unit 124, each of the wireless signal processing units 130, 140 and 150 adds a PHY (physical) header to the MAC frame to generate a PHY frame. Then, each of the wireless signal processing units 130, 140 and 150 performs a predetermined modulation operation on the PHY frame, converts the PHY frame into a wireless signal, and transmits the wireless signal via the antenna. The predetermined modulation operation includes, for example, convolutional encoding, interleaving, subcarrier modulation, inverse fast Fourier transform (IFFT), orthogonal frequency division multiplexing (OFDM) modulation, and frequency transform.

In addition, when receiving the wireless signal via the antenna, each of the wireless signal processing units 130, 140 and 150 performs a predetermined demodulation operation on the received wireless signal to restore the PHY frame. The predetermined demodulation operation includes, for example, frequency transform, OFDM demodulation, fast Fourier transform (FFT), subcarrier demodulation, deinterleaving, and Viterbi decoding. Then, each of the wireless signal processing units 130, 140, and 150 extracts the MAC frame from the PHY frame, and outputs the extracted MAC frame to the MAC frame processing unit 124.

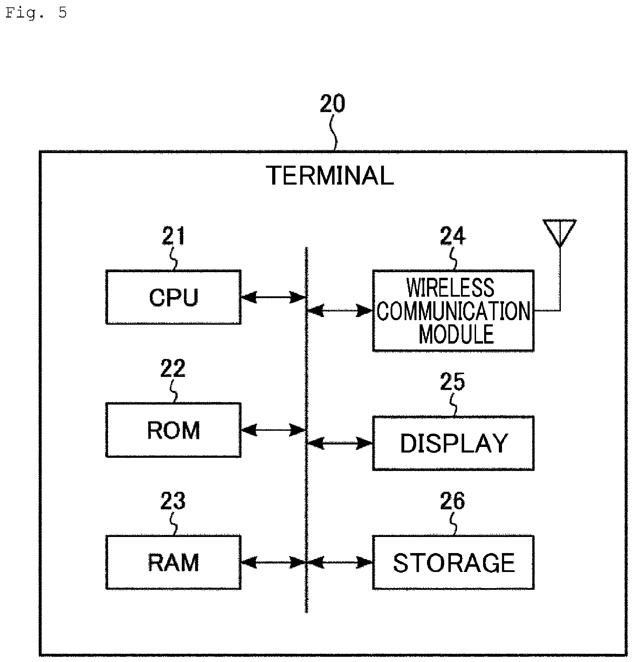

Fig. 5 is a diagram showing an example of a configuration of the terminal 20. As shown in Fig. 5, the terminal 20 includes, for example, a CPU 21, a ROM 22, a RAM 23, a wireless communication module 24, a display 25, and a storage 26.

The CPU 21 is a circuit capable of executing various programs and controls the entire operations of the terminal 20. The ROM 22 is a nonvolatile semiconductor memory and retains a program, control data, and the like for controlling the terminal 20. The RAM 23 is, for example, a volatile semiconductor memory and is used as a work area of the CPU 21. The wireless communication module 24 is a circuit used for transmitting and receiving data using the wireless signal, and is connected to the antenna. Also, the wireless communication module 24 includes a plurality of communication modules corresponding to a plurality of frequency bands, for example. The display 25 displays, for example, a graphical user interface (GUI) corresponding to application software. The display 25 may include a function of an input interface of the terminal 20. The storage 26 is a nonvolatile storage device, and retains system software of the terminal 20 and so forth.

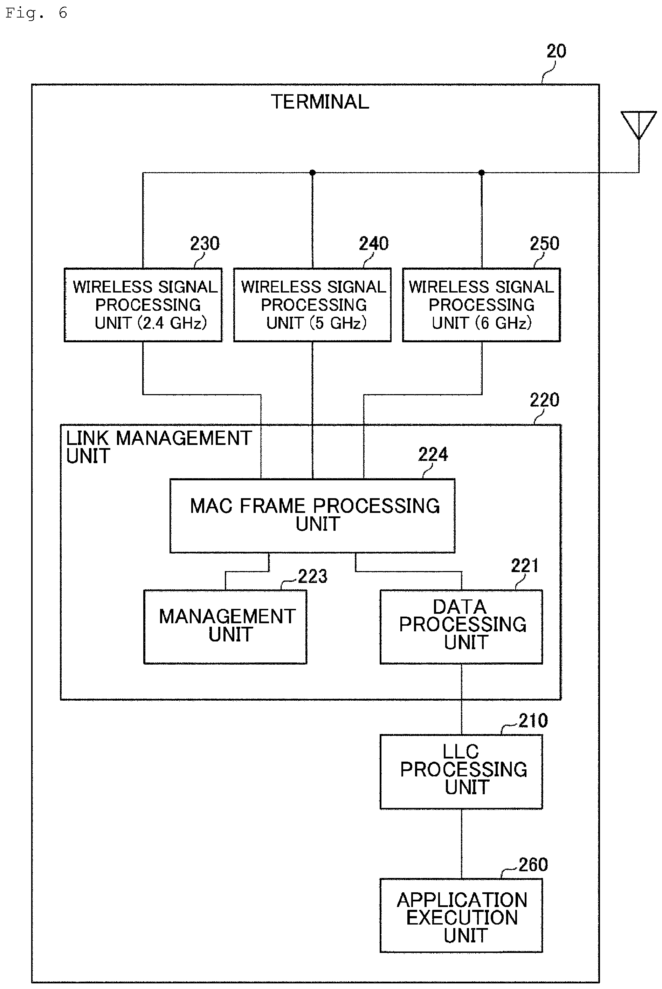

Fig. 6 is a diagram showing an example of a functional configuration of the terminal 20. As shown in Fig. 6, the terminal 20 includes, for example, an LLC processing unit 210, a link management unit 220, wireless signal processing units 230, 240, and 250, and an application execution unit 260. The processing of the LLC processing unit 210, the link management unit 220, and the wireless signal processing units 230, 240, and 250 is realized by the wireless communication module 24 or a combination of the CPU 21 and the wireless communication module 24. In addition, the processing of the application execution unit 260 is realized by the CPU 21.

The LLC processing unit 210 is capable of executing the processing of the LLC layer on inputted data. For example, the LLC processing unit 210 adds the DSAP header, the SSAP header and the like to the data inputted from the application execution unit 260 to generate an LLC packet. Then, the LLC processing unit 110 outputs the LLC packet to the link management unit 220. In addition, the LLC processing unit 210 extracts data from the MAC frame inputted from the link management unit 220. Then, the LLC processing unit 210 outputs the data to the application execution unit 260.

The link management unit 220 also is capable of executing the MAC layer processing, for example, on inputted data. In addition, the link management unit 220 manages a link with the base station 10 based on notifications from the wireless signal processing units 230, 240, and 250. The link management unit 220 includes a data processing unit 221, a management unit 223, and a MAC frame processing unit 224.

When receiving the LLC packet from the LLC processing unit 210, the data processing unit 221 adds the MAC header on the LLC packet to generate the MAC frame. Then, the data processing unit 221 outputs the MAC frame to the MAC frame processing unit 224. In addition, when receiving the MAC frame from the MAC frame processing unit 224, the data processing unit 221 extracts the LLC packet from the MAC frame. Then, the data processing unit 221 outputs the LLC packet to the LLC processing unit 210. In addition, when the divided data are transmitted from the plurality of wireless signal processing units by the multi-link, the data processing unit 221 rearranges the MPDUs to be restored from the MAC frame received from the MAC frame processing unit 224 in accordance with the sequence number. Then, the data processing unit 221 outputs the LLC packet to the LLC processing unit 210 when the arrangement order is completed. Note that the rearrangement of the MPDUs may be performed by other than the data processing unit 221.

The management unit 223 manages the link with the base station 10 based on notifications received from the wireless signal processing units 230, 240 and 250 via the MAC frame processing unit 224. For example, the management unit 223 requests the base station 10 to connect the multi-link via any one of the wireless signal processing units 230, 240 and 250. Also, the management unit 223 executes a protocol related to association and a protocol related to authentication in response to the request from the base station 10 via one of the wireless signal processing units 230, 240, and 250.

When receiving the Mac frame from the data processing unit 221, the MAC frame processing unit 224 temporarily stores the received Mac frame. Then, the MAC frame processing unit 224 performs carrier sensing over a random time, and confirms a state of a channel used in a link for transmitting a wireless signal. When the channel is empty, the MAC frame processing unit 224 outputs the MAC frame to the wireless signal processing unit corresponding to a link for transmitting the wireless signal among the wireless signal processing units 230, 240, and 250. In addition, when receiving the Mac frame from the wireless signal processing units 230, 240, and 250, the MAC frame processing unit 224 outputs the received MAC frame to the data processing unit 221.

Each of the wireless signal processing units 230, 240, and 250 is capable of executing, for example, processing of the physical layer on the inputted data. That is, each of the wireless signal processing units 230, 240, and 250 handles transmission and reception of the wireless signal between the base station 10 and the terminal 20. The wireless signal processing unit 230 handles wireless signals in the 2.4 GHz band. The wireless signal processing unit 240 handles wireless signals in the 5 GHz band. The wireless signal processing unit 250 handles wireless signals in the 6 GHz band. The wireless signal processing units 230, 240, and 250 may or may not share the antenna of the terminal 20.

For example, when receiving the MAC frame from the MAC frame processing unit 224, each of the wireless signal processing units 230, 240, and 250 adds the PHY header to the MAC frame to generate the PHY frame. Then, each of the wireless signal processing units 230, 240, and 250 performs a predetermined modulation operation on the PHY frame, converts the PHY frame into a wireless signal, and transmits the wireless signal via the antenna. The predetermined modulation operation includes, for example, convolutional encoding, interleaving, subcarrier modulation, inverse fast Fourier transform, OFDM modulation, and frequency transform.

In addition, when receiving the wireless signal via the antenna, each of the wireless signal processing units 230, 240, and 250 performs the predetermined demodulation operation on the received wireless signal to restore the PHY frame. The predetermined demodulation operation includes, for example, frequency transform, OFDM demodulation, fast Fourier transform, subcarrier demodulation, deinterleaving, and Viterbi decoding. Then, each of the wireless signal processing units 230, 240, and 250 extracts the MAC frame from the PHY frame, and outputs the extracted MAC frame to the MAC frame processing unit 224.

The application execution unit 260 executes an application which can use the data inputted from the LLC processing unit 210. For example, the application execution unit 260 can display information regarding the application on the display 25. Also, the application execution unit 260 can operate based on operation of the input interface.

In the wireless system 1 according to the embodiment described above, the wireless signal processing units 130, 140 and 150 of the base station 10 are configured to be able to connect to the wireless signal processing units 230, 240 and 250 of the terminal 20, respectively. That is, the wireless signal processing units 130 and 230 can be wirelessly connected using the 2.4 GHz band. The wireless signal processing units 140 and 240 can be wirelessly connected using the 5 GHz band. The wireless signal processing units 150 and 250 can be connected wirelessly using the 6 GHz band. In the present specification, each wireless signal processing unit may be referred to as a "STA function". That is, the wireless system 1 according to the embodiment has a plurality of STA functions. In the following description, the link between the wireless signal processing units 130 and 230 may be referred to as link #1, the link between the wireless signal processing units 140 and 240 may be referred to as link #2, and the link between the wireless signal processing units 150 and 250 may be referred to as link #3.

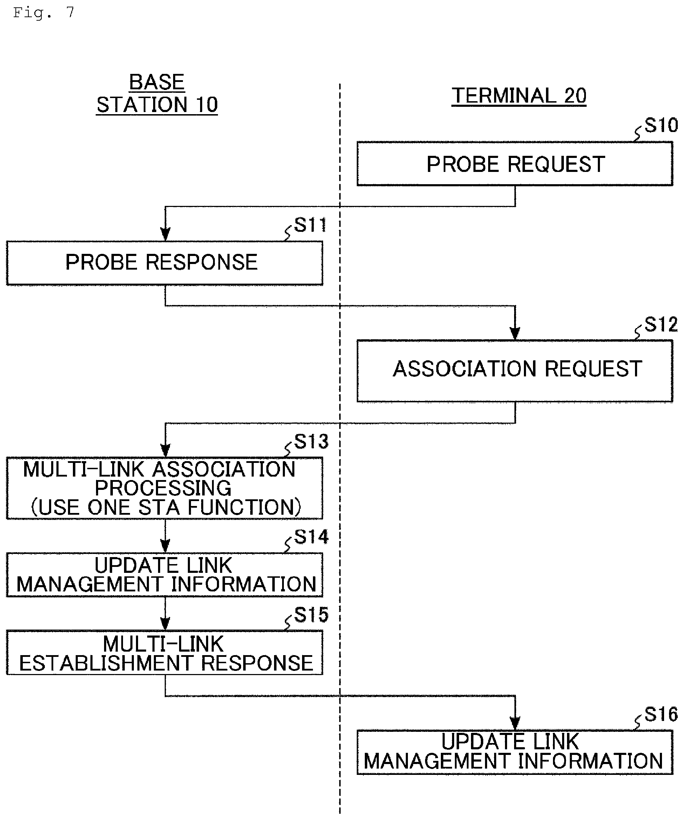

Next, one example of operations related to a multi-link of the wireless system 1 according to the embodiment will be described. Fig. 7 is a flowchart showing one example of multi-link setup processing in the wireless system 1 according to the embodiment.

In the processing of step S10, the terminal 20 transmits a probe request to the base station 10. The probe request is a signal for confirming whether the base station 10 exists around the terminal 20. The Frame Control field of the probe request includes, for example, "00/0100 (Type value/Subtype value)". When the probe request is received, the base station 10 performs the processing of step S11.

The base station 10 transmits a probe response to the terminal 20 in the processing of the step S11. The probe response is a signal used by the base station 10 for a response to the probe request of the terminal 20. The Frame Control field of the probe response includes, for example, "00/0101 (Type value/Subtype value)". Upon receiving the probe response, the terminal 20 executes the processing of step S12. Here, the probe response includes information necessary for establishing a multi-link equivalent to a normal beacon described later.

The terminal 20 transmits an association request to the base station 10 via at least one STA function in the processing of the step S12. The association includes a signal for requesting the base station 10 to establish the multi-link. For example, the association request is generated by the link management unit 220 of the terminal 20. The Frame Control field of the association request includes, for example, "00/0000 (Type value/Subtype value)". When receiving the association request including the signal for requesting to establish the multi-link, the link management unit 120 of the base station 10 performs the processing of step S13. Note that a normal association request to which information for a multi-link connection is added may be used as the association request.

The management unit 123 of the base station 10 executes multi-link association processing using one STA function in the processing of the step S13. In particular, the base station 10 first executes association processing for a first STA function with the terminal 20. When a wireless connection (link) is established in the first STA function, the management unit 123 of the base station 10 executes association processing of a second STA function using the first STA function for which the link is established. That is, the STA function for which the link is established is used for association processing of an STA function without established link. When association processing of at least two STA functions is completed, the base station 10 establishes a multi-link and performs the processing of step S14.

In the processing of the step S14, the management unit 123 of the base station 10 updates the link management information. The link management information includes, for each ID of the STA function, information indicating whether or not a link using a corresponding STA function is established, information on a frequency band (channel) handled by the corresponding STA function, information indicating whether or not the corresponding STA function is used for an anchor link, and information on the traffic type of data handled by the link of the corresponding STA function. Here, the anchor link is a link which is distinguished from the other links and executes a special operation in addition to a general operation. For example, the special operation is transmission and reception of control information related to the operation of the multi-link and the like. As will be described later, the control information related to the operation of the multi-link includes multi-link capability information, anchor link information, and operation information for each link. The anchor link may be set by the management unit 123.

The base station 10 transmits a multi-link establishment response to the terminal 20 in the processing of step S15. The multi-link establishment response is a signal used by the base station 10 for a response to the multi-link request from the terminal 20. The Frame Control field of the multi-link establishment response includes, for example, "00/0001 (Type value/Subtype value)". The link management unit 220 of the terminal 20 recognizes that the multi-link with the base station 10 is established based on the reception of the multi-link establishment response. When receiving the multi-link establishment response, the terminal 20 performs the processing of step S16.

The management unit 223 of the terminal 20 updates the link management information in the processing of the step S16. The link management information managed by the terminal 20 may be the same as the link management information managed by the base station 10.

The link management information is updated in both the base station 10 and the terminal 20, thereby completing the setup of the multi-link. As a result, data communication using the multi-link is possible between the base station 10 and the terminal 20. For example, inputted data may be transmitted in a distributed manner to a plurality of links. Also, data may be transmitted using another link when a channel of a certain link is not empty.

Here, in the example shown in Fig. 7, after the probe request from the terminal 20 and the probe response from the base station 10, a connection processing for establishing the multi-link is executed. On the other hand, the base station 10 may periodically transmit a beacon, and the terminal 20 receiving the beacon transmits the association request for establishing the multi-link, thereby performing connection processing for establishing the multi-link.

Next, beacon transmission processing of the base station 10 will be described. In the embodiment, the base station 10 periodically transmits beacons using respective channels. At this time, the beacon management unit 122 performs , as claimed, beacon selection processing for each channel and beacon selection processing for each period to manage setting of beacon transmission. The MAC frame processing unit 124 transmits either a normal beacon or a simple beacon by using each channel on the basis of setting of the beacon transmission managed by the beacon management unit 122.

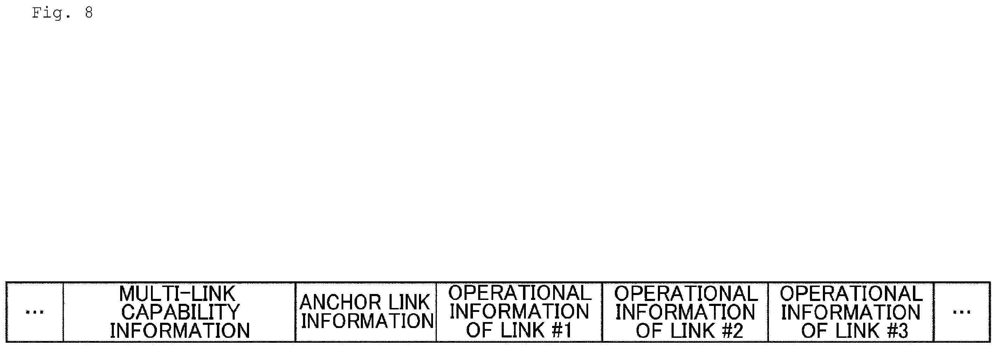

Fig. 8 is a diagram showing an example of information included in the normal beacon. The normal beacon in the embodiment includes information necessary for establishing and operating the multi-link. As shown in Fig. 8, the normal beacon includes multi-link capability information, anchor link information, operation information of link #1, operational information of link #2, and operational information of link #3. The normal beacon may include information other than that shown in Fig. 8.

The multi-link capability information indicates whether or not the base station 10 can set the multi-link. For example, when the multi-link capability information is "0," it indicates that the multi-links cannot be set. When the multi-link capability information is "1," it indicates that multi-links can be set.

The anchor link information is information indicating an ID of an anchor link. When the base station 10 has three STA functions as in the embodiment, the anchor link information may be any of three numerical values, for example, "0", "1", and "2". In this case, for example, when the anchor link information is "0", it indicates that the link #1 is an anchor link. In addition, when the anchor link information is "1", it indicates that the link #2 is an anchor link. Further, when the anchor link information is "2", it indicates that the link #3 is an anchor link.

The operation information of the link #1 indicates an operational parameter used in the link #1. The operation information of the link #2 indicates an operational parameter used in the link #2. The operation information of the link #3 indicates an operational parameter used in the link #3. The operational parameters include, for example, an access parameter of an Enhanced Distributed Channel Access (EDCA).

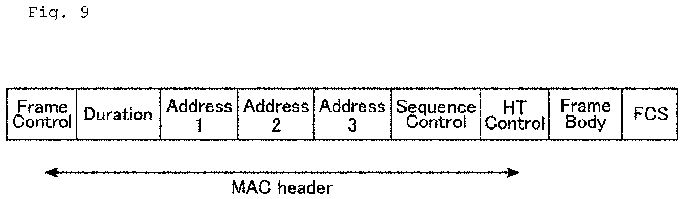

The normal beacon may be transmitted, for example, using a management frame. Fig. 9 is a diagram showing an example of a frame format of a management frame. As shown in Fig. 9, the management frame includes, for example, a Frame Control field, a Duration field, an Address 1 field, an Address 2 field, an Address 3 field, a Sequence Control field, an HT Control field, a Frame Body field, and an FCS (Frame Check Sequence) field. As described above, when the management frame is used as a beacon frame, the frame control field includes "00 / 1000 (Type value /Subtype value)". The information shown in Fig. 9 is stored in, for example, the Frame Body field of the beacon frame.

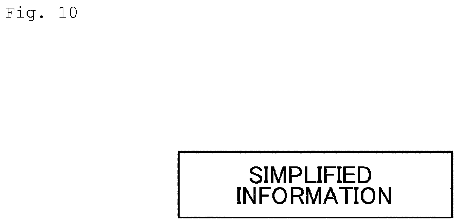

On the other hand, Fig. 10 is a diagram showing an example of information included in the simple beacon. As shown in Fig. 10, the simple beacon includes simplified information. The simplified information is information in which at least a part of an information element included in the normal beacon is included in a simplified state. The simplification includes omission, replacement, etc. of a part of information elements included in the normal beacon.

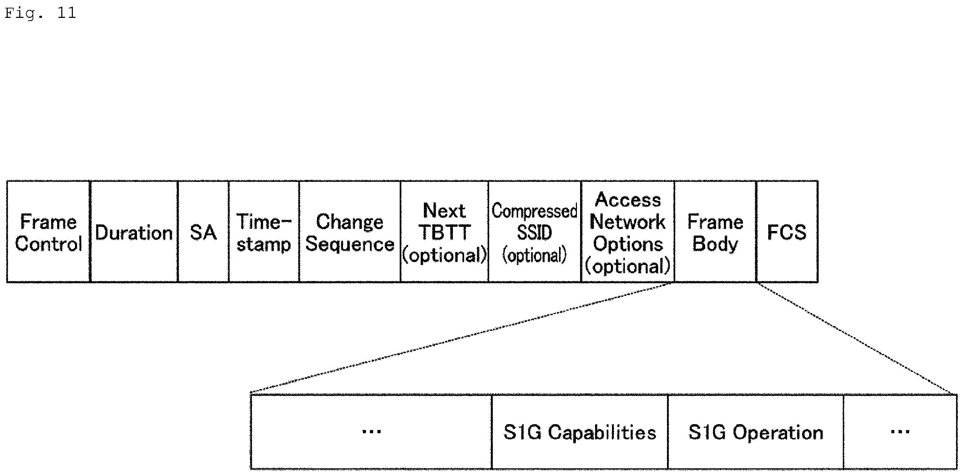

The simple beacon may be, for example, an S1G (Sub 1Giga) beacon frame regulated in IEEE 802.ah. Fig. 11 is an example of a frame format of a S1G beacon frame. S1G Capabilities regulated in the Frame Body field of the S1G beacon frame may be used as simple multi-link capability information. Similarly, an S1G Operation regulated in the Frame Body field of the S1G beacon frame may be used as simple link operation information.

The simple beacon is not limited to the one transmitted in the S1G beacon frame. The simple beacon may be transmitted using a FILS (Fast Initial Link Setup) scheme regulated in IEEE 802.ai. In this way, the simple beacon may be a beacon of any type that can be transmitted in a shorter time than the normal beacon.

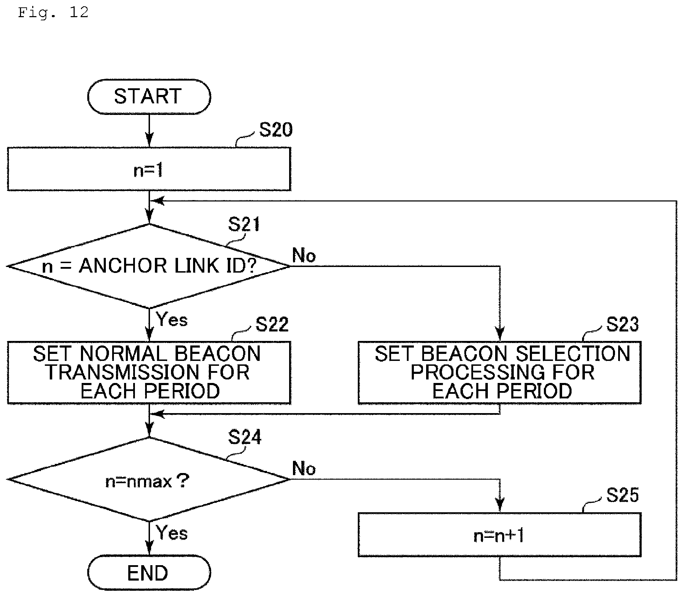

Fig. 12 is a flowchart showing beacon selection processing for each channel.

In step S20, the beacon management unit 122 sets a parameter n to 1. The parameter n is a parameter indicating the ID of a channel used by the base station 10. For example, if the channels used by the base station 10 are three channels #1, #2, and #3, the parameter n may take three values of 0, 1, and 2.

In step S21, the beacon management unit 122 judges whether or not the parameter n matches the ID of the anchor link. When it is judged in the S21 that the parameter n is coincident with the anchor link ID, the processing proceeds to step S22. When it is judged in the step S21 that the parameter n is not coincident with the anchor link ID, the processing proceeds to step S23.

In the step S22, the beacon management unit 122 sets so that the normal beacon is periodically transmitted at a channel #n. In the step S23, the beacon management unit 122 sets so that beacon selection processing for each period is performed at a channel #n. After the step S22 or the step S23, the processing proceeds to step S24.

In the step S24, the beacon management unit 122 judges whether or not the parameter n has reached a threshold value nmax. The threshold value nmax is the number of channels used by the base station 10. For example, when the channels used by the base station 10 are three channels #1, #2, and #3, the threshold value nmax is 3. When it is determined in the step S24 that the parameter n has not reached the threshold value nmax, the processing proceeds to step S25. When it is determined in the step S24 that he parameter n has reached the threshold value nmax, the beacon management unit 122 terminates processing of Fig. 12.

In the step S25, the beacon management unit 122 increments n by 1. After that, the beacon management unit 122 returns the processing to the step S21. In this case, the processing of step S21 to S24 is executed on next channel.

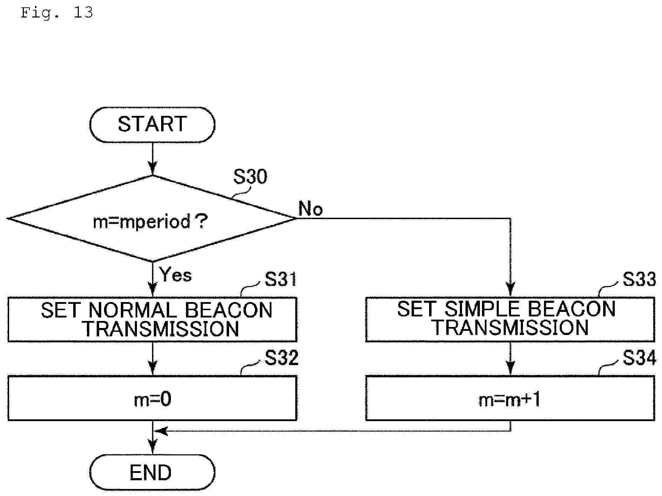

Fig. 13 is a flowchart showing beacon selection processing for each period. The beacon selection processing for each period is performed for each channel other than a channel used as the anchor link every time a transmission period of a predetermined beacon elapses. For example, when the channel used by the base station 10 is three of a channel #1, a channel #2 and a channel #3 and the channel #1 is a channel used as the anchor link, the beacon selection processing for each period is performed for the channel #2 and the channel #3. Here, when the number of channels not used as the anchor link is two or more, the beacon selection processing for each period for each channel may be performed in parallel or sequentially.

In step S30, the beacon management unit 122 judges whether or not the parameter m has reached mperiod. The parameter m is a parameter representing a transmission period of a current beacon. The initial value of the parameter m is "0", for example. Also, the mperiod is a threshold value indicating the transmission period of the normal beacon in a channel not used as the anchor link. The mperiod is, for example, a natural number. When it is determined in the step S30 that the parameter m has reached the threshold value mperiod, the processing proceeds to step S31. When it is determined in the step S30 that the parameter m has not reached the threshold value mperiod, the processing proceeds to step S33.

In the step S31, the beacon management unit 122 sets the MAC frame processing unit 124 through the management unit 123 so as to transmit the normal beacon. In response to this, the MAC frame processing unit 124 generates the normal beacon, and transmits the generated normal beacon via the STA function of the corresponding channel. The normal beacon may be generated by the data processing unit 121 instead of the MAC frame processing unit 124.

In step S32, the beacon management unit 122 resets the parameter m to 0. After that, the beacon management unit 122 terminates the processing of Fig. 13.

In the step S33, the beacon management unit 122 sets the MAC frame processing unit 124 through the management unit 123 so as to transmit the simple beacon. In response to this, the MAC frame processing unit 124 generates the simple beacon, and transmits the generated simple beacon via the STA function of the corresponding channel. The simple beacon may be generated by the data processing unit 121 instead of the MAC frame processing unit 124.

In step S34, the beacon management unit 122 increments the parameter m by one. After that, the beacon management unit 122 terminates the processing of Fig. 13.

Next, transmission processing of the normal beacon in a channel used as the anchor link will be described. For a channel used as the anchor link, the beacon management unit 122 sets the MAC frame processing unit 124 via the management unit 123 so as to transmit the normal beacon every time a transmission period of a predetermined beacon elapses. In response to this, the MAC frame processing unit 124 generates the normal beacon, and transmits the generated normal beacon via the STA function of a channel used as the anchor link. The normal beacon may be generated by the data processing unit 121 instead of the MAC frame processing unit 124.

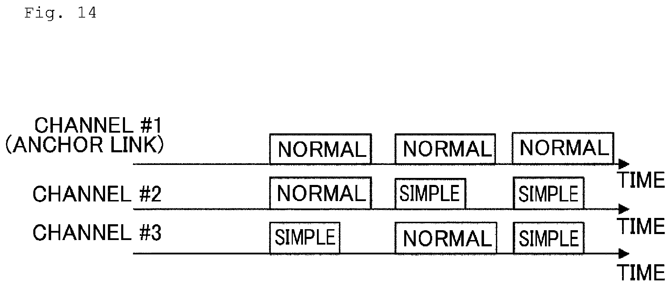

Fig. 14 is a diagram showing beacons transmitted on a channel used as the anchor link and on other channels not used as the anchor link, respectively. In Fig. 14, the channel used as the anchor link is channel #1, and the other channels are channel #2 and channel #3.

As shown in Fig. 14, the normal beacon is transmitted at a constant period in the channel #1 which is the anchor link. On the other hand, in the channel #2 and the channel #3, the simple beacon is transmitted in principle, and the normal beacon is transmitted only at a specific period.

Here, the specific period for transmitting the normal beacon may be individually changed according to the link quality (channel utilization rate, frame transmission error rate, transmission ratio of high priority frame and low priority frame transmitted in accordance with the channel, etc.) of each link for transmitting the beacon. For example, when a channel utilization rate is high, an error rate of frame transmission is high, and a transmission ratio of a high priority frame is high, the length for transmitting the normal beacon may be longer than other channels. In this case, the value of the threshold value mperiod is set in accordance with the link quality, and is different for each channel. Thus, efficient beacon transmission corresponding to the link quality is enabled. Note that the quality class may be defined based on each parameter of the link quality, the quality class may be selected by periodically evaluating each parameter, and the value of the threshold value mperiod associated with the quality class may be used.

As described above, according to the embodiment, the beacon including information related to the multi-link is transmitted using a plurality of channels. The beacon is transmitted on a plurality of channels, so that the information of the channel used for the link can be recognized by the surrounding base station and terminal where the link is not established.

Here, transmission of a beacon with a large amount of information on all channels may lead to a reduction in the operation efficiency of the channel as the wireless system. On the other hand, in the embodiment, the beacon management unit 122 manages the transmission of the beacon so that the normal beacon and the simple beacon are switched and transmitted at a constant period for channels other than the channel used as the anchor link. In this way, in the embodiment, the channel used as the anchor link mainly performs notification of information necessary for establishing and operating the multi-link, thereby improving transmission efficiency in other channels. In this way, in this embodiment, the beacon can be efficiently transmitted using a plurality of channels.

### Modification Example 1

Modification example of the embodiment will be described below. In the embodiment, the normal beacon is always transmitted on a channel used as the anchor link. On the other hand, the simple beacon may be set to be transmitted even on a channel used as the anchor link. In this case, the transmission frequency of the normal beacon in the channel used as the anchor link is made larger than the transmission frequency of the normal beacon in the channel not used as the anchor link.

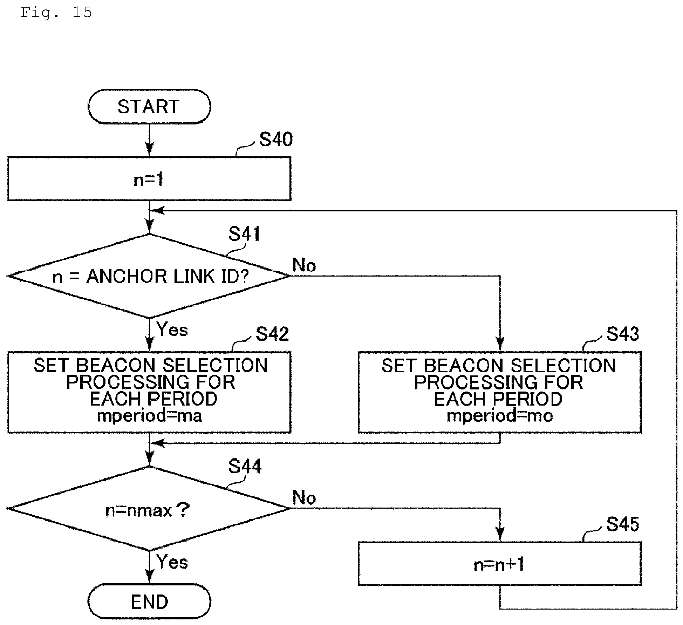

Fig. 15 is a flowchart showing beacon selection processing for each channel according to a modification example **1.** In a step s40, the beacon management unit 122 sets the parameter n to 1. The parameter n indicates the ID of the channel used by the above-described base station 10.

In step S41, the beacon management unit 122 judges whether or not the parameter n is coincident with the ID of the anchor link. When it is judged in the step S41 that the parameter n is coincident with the ID of the anchor link, the processing proceeds to step S42. When it is determined in the step S41 that the parameter n is not coincident with the ID of the anchor link, the processing proceeds to step S43.

In the step S42, the beacon management unit 122 sets so that beacon selection processing for each period is performed in a channel #n. In addition, the beacon management unit 122 sets the threshold value mperiod in the beacon selection processing for each period of the channel #n to ma. In the step S43, the beacon management unit 122 sets so that the beacon selection processing for each period is performed in the channel #n. Further, the beacon management unit 122 sets the threshold value mperiod in the beacon selection processing for each period of the channel #n to mo. Here, ma < mo is satisfied. After the step S42 and the step S43, the processing proceeds to step S44.

In the step S44, the beacon management unit 122 judges whether or not the parameter n has reached the threshold value nmax. The threshold value nmax is the number of channels used by the base station 10. When it is judged in the step S44 that the parameter n has not reached the threshold value nmax, the processing proceeds to step S45. When it is judged in the step S44 that the parameter n has reached the threshold value nmax, the beacon management unit 122 terminates the processing in Fig. 15.

In the step S45, the beacon management unit 122 increments n by 1. After that, the beacon management unit 122 returns the processing to the step S41. In this case, the processing of step S41 to S44 is executed in next channel.

After the beacon selection processing for each channel, the beacon management unit 122 performs the beacon selection processing for each period for each channel including a channel used as the anchor link for each transmission period of a predetermined beacon. The beacon selection processing for each period may be the same as that shown in Fig. 13. However, the value of the threshold value mperiod in the step S30 is different for each channel. That is, the threshold value ma is used when the channel is used as the anchor link, and the threshold value mo is used when the channel is not used as the anchor link.

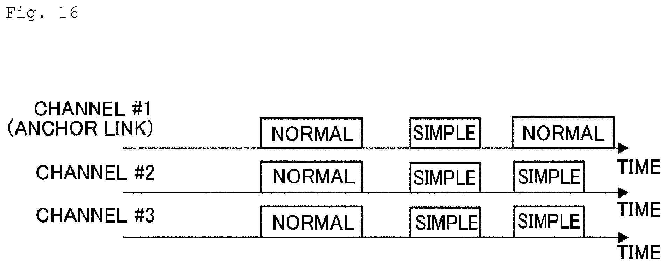

Fig. 16 is a diagram showing beacons transmitted on a channel used as the anchor link and on other channels not used as the anchor link in the modification example 1. In Fig. 16, the channel used as the anchor link is channel #1, and the other channels are channel #2 and channel #3.

As shown in Fig. 16, in the modification example 1, the normal beacon is transmitted at a specific period during transmission of the simple beacon in all of the channel #1 which is a channel used as the anchor link and the channels #2 and #3 which are the other channels. However, since ma < mo is satisfied, the transmission frequency of the normal beacon is higher for the channel #1.

Here, the specific period for transmitting the normal beacon may be individually changed in accordance with the link quality (channel utilization rate, frame transmission error rate, transmission ratio of high priority frame and low priority frame transmitted in accordance with the channel, etc.) of each link for transmitting the beacon. For example, when a channel utilization rate is high, an error rate of frame transmission is high, and a transmission ratio of a high priority frame is high, the period for transmitting the normal beacon may be longer than other channels. In this case, the value of the threshold value mo is set in accordance with the link quality, and is different for each channel. On the other hand, the value of the threshold value ma is not changed. Thus, efficient beacon transmission corresponding to the link quality is enabled. Note that the quality class may be defined based on each parameter of the link quality, the quality class may be selected by periodically evaluating each parameter, and the value of the threshold value mo associated with the quality class may be used.

As described above, in the modification example 1, the channel used as the anchor link mainly performs notification of information necessary for establishing the multi-link, thereby improving the transmission efficiency in other channels. Further, in the modification example 1, the simple beacon transmission is performed also for the channel used as the anchor link, so that the transmission efficiency in the channel used as the anchor link can be improved.

### Modification Example 2

A modification example 2 of the embodiment will be described next. The modification example 2 is an example in which each channel uniformly performs notification of information necessary for establishing the multi-link.

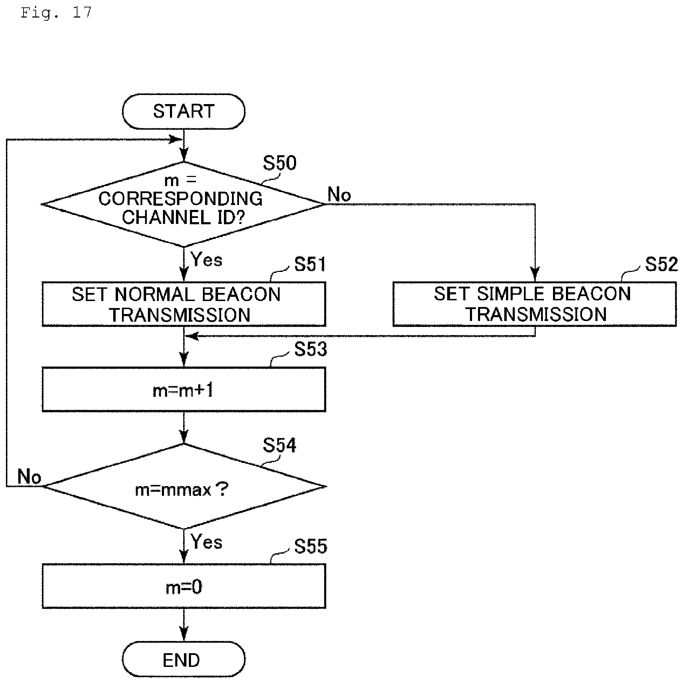

Fig. 17 is a flowchart showing the beacon selection processing for each period according to the modification example 2. The beacon selection processing for each period in the modification example 2 is processing performed for each channel including the channel used as the anchor link. In the modification example 2, the beacon selection processing for each channel is omitted.

In step S50, the beacon management unit 122 judges whether or not the parameter m is coincident with the ID of the corresponding channel. The parameter m is a parameter indicating the ID of a channel used by the base station 10. In addition, the corresponding channel ID is an ID of a channel to be subjected to the beacon selection processing for each period during execution. For example, when the beacon selection processing for each period is performed for the channel #1, the ID of the corresponding channel is 0. When it is determined in the step S50 that the parameter m is coincident with the ID of the corresponding channel, the processing proceeds to step S51. When it is determined in the step S50 that the parameter m is not coincident with the ID of the corresponding channel, the processing proceeds to step S52.

In the step S51, the beacon management unit 122 sets the MAC frame processing unit 124 through the management unit 123 so as to transmit the normal beacon. In response to this, the MAC frame processing unit 124 generates the normal beacon, and transmits the generated normal beacon via the STA function of the corresponding channel. The normal beacon may be generated by the data processing unit 121 instead of the MAC frame processing unit 124. In the step S52, the beacon management unit 122 sets the MAC frame processing unit 124 via the management unit 123 so as to transmit the simple beacon. In response to this, the MAC frame processing unit 124 generates the simple beacon, and transmits the generated simple beacon via the STA function of the corresponding channel. The simple beacon may be generated by the data processing unit 121 instead of the MAC frame processing unit 124.

In step S53, the beacon management unit 122 increments m by 1.

In step S54, the beacon management unit 122 judges whether or not the parameter m has reached the threshold value mmax. The threshold value mmax is the number of channels used by the base station 10. When it is determined in the step S54 that the parameter m has not reached the threshold value mmax, the beacon management unit 122 returns the processing to the step S50. In this case, the processing of step S50 to S54 is executed in next channel. When it is determined in the step S54 that the parameter m has reached the threshold value mmax, the processing proceeds to step S55.

In the step S55, the beacon management unit 122 resets the parameter m to 0. After that, the beacon management unit 122 terminates the processing in Fig. 17.

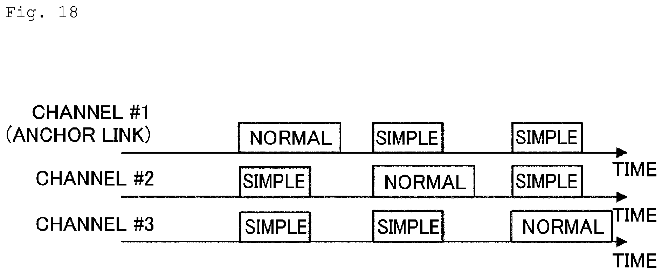

Fig. 18 is a diagram showing beacons transmitted on a channel used as the anchor link and on other channels not used as the anchor link in the modification example 2. In Fig. 18, the channel used as the anchor link is channel #1, and the other channels are channel #2 and channel #3.

As shown in Fig. 18, in the modification example 2, the normal beacon is transmitted at a specific period during transmission of the simple beacon in all of the channel #1 which is the channel used as the anchor link and the channels #2 and #3 which are the other channels, similarly to the modification example 1. In the modification example 2, the period in which the normal beacon is transmitted is shifted for each channel.

Here, the specific period for transmitting the normal beacon may be individually changed in accordance with the link quality (channel utilization rate, frame transmission error rate, transmission ratio of high priority frame and low priority frame transmitted in accordance with the channel, etc.) of each link for transmitting the beacon. For example, when a channel utilization rate is high, an error rate of frame transmission is high, and a transmission ratio of a high priority frame is high, the period for transmitting the normal beacon may be longer than other channels. In this case, the value of the threshold value mmax is set in accordance with the link quality, and is different for each channel. Thus, efficient beacon transmission corresponding to the link quality is enabled. Note that the quality class may be defined based on each parameter of the link quality, the quality class may be selected by periodically evaluating each parameter, and the value of the threshold value mmax associated with the quality class may be used.

As described above, in the modification example 2, the channel used as the anchor link does not mainly perform notification of information necessary for establishing the multi-link, but the respective channels uniformly perform notification. Thus, the transmission efficiency of each channel can be uniformly improved. Further, since the transmission timing of the normal beacon is offset so as to be shifted for each channel, the possibility that the normal beacon including multi-link information can be received on any channel when the terminal scans, for example is increased.

Furthermore, the configurations of the wireless systems 1 according to the embodiment and the modification examples are merely examples, and other configurations can be used. For example, although a case where each of the base station 10 and the terminal 20 has three STA functions (wireless signal processing units) has been exemplified, the present invention is not limited to this. The base station 10 is only required to include at least two wireless signal processing units. Similarly, the terminal 20 is only required to include at least two wireless signal processing units. In addition, the number of channels that can be processed by each STA function can be set appropriately in accordance with the frequency band to be used. Each of the wireless communication modules 14 and 24 may correspond to wireless communication in a plurality of frequency bands by a plurality of communication modules, or may correspond to wireless communication in a plurality of frequency bands by one communication module.

In addition, the functional configurations of the base station 10 and the terminal 20 in the wireless system 1 according to the embodiments and the modification examples are merely examples. The functional configurations of the base station 10 and the terminal 20 may have other names and groupings as long as the operations described in each embodiment can be performed.

Further, in the wireless system 1 according to the embodiments, the CPU included in each of the base station 10 and the terminal 20 may be another circuit. For example, a Micro Processing Unit (MPU) or the like may be used in place of the CPU. Furthermore, each of the processing described in each embodiment may be realized using dedicated hardware. The wireless system 1 according to each embodiment may perform both processing executed by software and processing executed by hardware, or may perform only one of them.

Note that the embodiments may be combined as appropriate, and in such a case, combined effects can be obtained. Further, the embodiments described above include various aspects of the invention, and the various aspects of the invention can be extracted by combinations selected from a plurality of disclosed constituent elements. For example, even when some of all the constituent elements disclosed in the embodiments are deleted, as long as the problems can be solved and the effects can be obtained, a configuration from which the constituent elements are deleted can be extracted as an aspect of the invention.

### Reference Signs List

1 Wireless system
10 Base station
11, 21 CPU
12, 22 ROM
13, 23 RAM
14, 24 Wireless communication module
15 Wired communication module
20 Terminal
25 Display
26 Storage
30 Server
110, 210 LLC processing unit
120, 220 Link management unit
121, 221 Data processing unit
122 Beacon management unit
123, 223 Management unit
124, 224 MAC frame processing unit
130, 140, 150, 230, 240, 250 Wireless signal processing unit
260 Application execution unit

## Claims

1. A base station(10), comprising:
a first wireless signal processing unit (130,140,150) configured tc be able to transmit and receive a wireless signal using a first channel;
a second wireless signal processing unit (130,140,150) configured tc be able to transmit and receive a wireless signal using a second channel which is different from the first channel; and
a beacon management unit (122) configured to perform beacon selection processing for each channel and beacon selection processing for each period, in order to manage transmission of a beacon of the first wireless signal processing unit so that a first beacon is periodically transmitted from the first wireless signal processing unit, and to manage transmission of a beacon of the second wireless signal processing unit so that the first beacon and a second beacon including information simplified than information included in the first beacon are periodically switched and transmitted from the second wireless signal processing unit.

2. The base station according to claim 1, wherein
the beacon management unit further manages transmission of a beacon of the first wireless signal processing unit so that the first beacon and the second beacon are periodically transmitted from the first wireless signal processing unit, and
a transmission frequency of the first beacon transmitted from the first wireless signal processing unit is higher than a transmission frequency of the first beacon transmitted from the second wireless signal processing unit.

3. The base station according to claim 1, wherein
the beacon management unit further manages transmission of a beacon of the first wireless signal processing unit so that the first beacon and the second beacon are periodically transmitted from the first wireless signal processing unit, and
transmission timing of the first beacon by the first wireless signal processing unit is shifted from the transmission timing of the first beacon by the second wireless signal processing unit.

4. The base station according to any one of claims 1 **to 3,** wherein
the first beacon includes necessary information to establish a multi-link using the first and second wireless signal processing units.

5. The base station according to any one of claims 1 **to 4,** wherein
the second beacon is an S1G beacon or a beacon transmitted in a FILS scheme.

6. The base station according to any one of claims 1 **to 5,** wherein
the first channel is a channel used for establishing a multi-link using the first and second wireless signal processing units.

## Patentansprüche

1. Basisstation (1), umfassend:
eine erste drahtlose Signalverarbeitungseinheit (130, 140, 150), die konfiguriert ist zum Senden und Empfangen eines drahtlosen Signals unter Verwendung eines ersten Kanals;
eine zweite drahtlose Signalverarbeitungseinheit (130, 140, 150), die konfiguriert ist zum Senden und Empfangen eines drahtlosen Signals unter Verwendung eines zweiten Kanals, der sich von dem ersten Kanal unterscheidet; und
eine Beacon-Verwaltungseinheit (122), die konfiguriert ist zum Durchführen einer Beacon-Auswahlverarbeitung für jeden Kanal und einer Beacon-Auswahlverarbeitung für jede Periode, um die Übertragung eines Beacons der ersten drahtlosen Signalverarbeitungseinheit zu verwalten, sodass ein erstes Beacon periodisch von der ersten drahtlosen Signalverarbeitungseinheit gesendet wird, und um die Übertragung eines Beacons der zweiten drahtlosen Signalverarbeitungseinheit zu verwalten, sodass das erste Beacon und ein zweites Beacon, das Information umfasst, die gegenüber der im ersten Beacon enthaltenen Information vereinfacht ist, periodisch umgeschaltet und von der zweiten drahtlosen Signalverarbeitungseinheit gesendet werden.

2. Basisstation nach Anspruch 1, wobei
die Beacon-Verwaltungseinheit ferner die Übertragung eines Beacons der ersten drahtlosen Signalverarbeitungseinheit verwaltet, sodass das erste Beacon und das zweite Beacon periodisch von der ersten drahtlosen Signalverarbeitungseinheit gesendet werden, und
eine Übertragungsfrequenz des von der ersten drahtlosen Signalverarbeitungseinheit gesendeten ersten Beacons höher ist als eine Übertragungsfrequenz des von der zweiten drahtlosen Signalverarbeitungseinheit gesendeten ersten Beacons.

3. Basisstation nach Anspruch 1, wobei
die Beacon-Verwaltungseinheit ferner die Übertragung eines Beacons der ersten drahtlosen Signalverarbeitungseinheit verwaltet, sodass das erste Beacon und das zweite Beacon periodisch von der ersten drahtlosen Signalverarbeitungseinheit gesendet werden, und
ein Übertragungszeitpunkt des ersten Beacons durch die erste drahtlose Signalverarbeitungseinheit gegenüber dem Übertragungszeitpunkt des ersten Beacons durch die zweite drahtlose Signalverarbeitungseinheit verschoben ist.

4. Basisstation nach einem der Ansprüche 1 bis 3, wobei
das erste Beacon notwendige Information enthält, um einen Multi-Link unter Verwendung der ersten und zweiten drahtlosen Signalverarbeitungseinheit aufzubauen.

5. Basisstation nach einem der Ansprüche 1 bis 4, wobei
das zweite Beacon ein S1G-Beacon oder ein in einem FILS-Schema gesendetes Beacon ist.

6. Basisstation nach einem der Ansprüche 1 bis 5, wobei
der erste Kanal ein Kanal ist, der zum Aufbauen eines Multi-Links unter Verwendung der ersten und zweiten drahtlosen Signalverarbeitungseinheit verwendet wird.

## Revendications

1. Station de base (1), comprenant :
une première unité de traitement de signal sans fil (130, 140, 150) qui est configurée pour pouvoir transmettre et recevoir un signal sans fil en utilisant un premier canal ;
une deuxième unité de traitement de signal sans fil (130, 140, 150) qui est configurée pour pouvoir transmettre et recevoir un signal sans fil en utilisant un deuxième canal qui est différent du premier canal ; et
une unité de gestion de balise (122) qui est configurée pour effectuer un traitement de sélection de balise pour chaque canal et un traitement de sélection de balise pour chaque période, afin de gérer la transmission d'une balise de la première unité de traitement de signal sans fil de sorte qu'une première balise est transmise périodiquement depuis la première unité de traitement de signal sans fil, et de gérer la transmission d'une balise de la deuxième unité de traitement de signal sans fil de sorte que la première balise et une deuxième balise comprenant des informations simplifiées par rapport aux informations comprises dans la première balise sont périodiquement commutées et transmises depuis la deuxième unité de traitement de signal sans fil.

2. Station de base selon la revendication 1, dans laquelle
l'unité de gestion de balise gère en outre la transmission d'une balise de la première unité de traitement de signal sans fil de sorte que la première balise et la deuxième balise sont périodiquement transmises depuis la première unité de traitement de signal sans fil, et
une fréquence de transmission de la première balise transmise depuis la première unité de traitement de signal sans fil est supérieure à une fréquence de transmission de la première balise transmise depuis la deuxième unité de traitement de signal sans fil.

3. Station de base selon la revendication 1, dans laquelle
l'unité de gestion de balise gère en outre la transmission d'une balise de la première unité de traitement de signal sans fil de sorte que la première balise et la deuxième balise sont périodiquement transmises depuis la première unité de traitement de signal sans fil, et
le moment de transmission de la première balise par la première unité de traitement de signal sans fil est décalé par rapport au moment de transmission de la première balise par la deuxième unité de traitement de signal sans fil.

4. Station de base selon l'une quelconque des revendications 1 à 3, dans laquelle
la première balise comprend des informations nécessaires pour établir une multi-liaison en utilisant les première et deuxième unités de traitement de signal sans fil.

5. Station de base selon l'une quelconque des revendications 1 à 4, dans laquelle
la deuxième balise est une balise S1G ou une balise transmise selon un schéma FILS.

6. Station de base selon l'une quelconque des revendications 1 à 5, dans laquelle
le premier canal est un canal qui est utilisé pour établir une multi-liaison en utilisant les première et deuxième unités de traitement de signal sans fil.
